# EUROPEAN PATENT SPECIFICATION

(11) **EP 0 836 162 B1**
(45) Date of publication and mention of the grant of the patent: **30.05.2001**
(21) Application number: 98100070.6
(22) Date of filing: 26.03.1996
(51) Int. Cl.: G01G 19/42, G07F 9/02, G07F 17/32, G07F 9/08

(54) **Weighing apparatus in a gaming, amusement, or vending machine**
Waage in einem Spiel-, Vergnügungs- oder Verkaufsautomaten
Balance dans une machine à sous ou amusement ou distributeur automatique

(30) Priority: 31.03.1995 US 414238; 16.10.1995 US 5312 P; 16.01.1996 US 586513
(43) Date of publication of application: 15.04.1998
(62) Divisional of application: 96911417.2
(73) Proprietor: SPINTEKNOLOGY INC., Las Vegas, NV 89119 (US)
(72) Inventor: Filiberti, Peter, Las Vegas, Nevada 89103 (US); Coulter, Gary L., Las Vegas, Nevada 89113 (US); Karabin, Judith, Henderson, Nevada 89015 (US)
(74) Representative: Hotz, Klaus, Dipl.-El.-Ing./ETH Patentanwalt

(56) References cited:
- EP-A- 0 316 217
- EP-A- 0 509 735
- DE-A- 3 902 085
- DE-A- 4 140 451
- GB-A- 2 221 315
- GB-A- 2 272 383
- US-A- 5 232 064

## Description

The present invention relates to a weighing apparatus in a gaming, vending or amusement machine and to a method of coin theft detection in a gaming, amusement or vending machine comprising such a weighing apparatus.

This kind of machines comprises coin hoppers which are used to collect and distribute coins in gaming, amusement and vending machines, were it is usual to determine the number of coins in a hopper by weighing the hopper and using the collected hopper weight information to deter fraud and theft.

### BACKGROUND OF THE INVENTION

For many years, slot machines have been a popular attraction at gambling casinos and other gaming establishments. Such slot machines typically have a colorful display of gaming indicia, such as cherries, plums, oranges, sevens, etc. arrayed in rows and columns across the front of the slot machine. These gaming indicia can be spun into motion for game play by the insertion of a coin into the slot machine and pulling the slot machine handle. During game play, the inserted coin is collected in a coin reservoir within the slot machine called a "hopper". At the end of game play, the inserted coin will be retained in the hopper if there is a losing combination of gaming indicia shown or, alternatively, may be returned from the hopper to the slot machine player, perhaps with additional coins, if there is a winning combination of gaming indicia shown.

Periodically, slot machine hoppers must be serviced by casino technicians. For example, the hopper may have too few or too many coins and must have its contents adjusted appropriately. Also, coins might be jammed in parts of the hopper in such a way that the hopper cannot function properly. If so inclined, a dishonest technician can pilfer a few coins each time he services a slot machine. While each individual instance of such pilfering may not represent a significant threat to a casino's bottom line, the cumulative loss over time from such pilfering can be quite large. Casinos have tried to combat this problem by, among other things, assigning two or more technicians to each task requiring a slot machine to be opened. However, this approach leads to additional labor costs and may not even help if each of the assigned technicians is dishonest.

An alternate existing solution is to seal the hopper so that only trusted money-handling employees working in a cashier's cage can get to the coins. Nonetheless, slot machine hoppers are difficult to seal because such hoppers must typically give out coins after a winning play as well as receive them. Having coins jam is the hopper is also an ongoing concern. In those cases where the hopper is prone to jamming, sealing the hopper would inevitably result in greater down-time for the slot machines and create a loss of slot machine use which could be more detrimental to the casino than the theft loss.

Coins can be pilfered from slot machines hoppers not only by casino technicians but also by the slot machine players. For example, a player might attach a string to the coin he is inserting into the slot machine so that he can retrieve the coin from the slot machine by simply pulling the string after the coin has been erroneously counted as "received" by the slot machine and game play has begun. Also, the player might try to jam the payout counter after receiving a winning combination so that the slot machine continues

Unfortunately, merely counting passing coins as they go into the hopper and counting passing coins as they leave the hopper would not solve these types of theft problems. In the case of player fraud, the player can effectively fool or otherwise disable the existing types of coin counters. Similarly, in the case of technician fraud, such a physical inventory would only indicate that coins are missing, not who took them.

Prior art systems exist to count coins by weighing them. For example, U.S. Patent No. **5,193,629** and U.S. Patent No. **4,512,428** describe apparatuses for weighing coins. Nonetheless, while such weighing devices might be suitable for weighing coins in a money room, they are unsuitable for weighing coins in a vibration-prone gaming machine environment where the hoppers being weighed must be enclosed to prevent theft by players.

In Figure 2 of GB-A-2 221 315 the long dimension of load cell 8 is indicated to be arranged parallel to the axis of hopper 15.

### SUMMARY OF THE INVENTION

The present invention provides a weighing apparatus in a gaming, amusement or vending machine of claim 1. Prefered embodiments are defined by claims **2** and **3.**
The weighing apparatus may be constructed integrally with the coin hopper assembly and fits between the coin hopper and its base plate. In other preferred embodiments, the weighing apparatus is constructed separately from the coin hopper assembly. In these other preferred embodiments, the weighing apparatus includes upper and lower plates which are separated by one or more weighing instruments, such as load cells with strain gauges. In operation, the lower plate of this weighing apparatus is typically placed against the floor of the slot machine and the hopper is then simply placed on top of the weighing apparatus' upper plate.

The present invention also provides a method of coin theft detection of claim 4 comprising the weighing apparatus of claim 1. Preferred embodiments are defined by claims **5** to **14.**
The weighing apparatus may take periodic readings of the number of coins residing in the hopper and can communicate those readings. Using a preferred method of the present invention, the unauthorized removal of coins during an actual or purported technician maintenance procedure can be detected by determining a count of coins by weight when the slot machine door is opened, determining a count of coins by weight once the slot machine door is closed, and using those two counts to determine the change in the number of coins in the hopper at the time of servicing. The identity of the person opening the hopper door and the time at which the hopper door is opened and closed can be recorded, along with any detected discrepancy. The calculation of any detected discrepancy may take into account an expected change in coin count. An expected change in coin count would exist when a technician is asked to open the machine and either remove or insert coins.

A similar method can also be used to detect a player's theft of coins from the slot machine. In this method, the actual number of coins in the hopper can be determined by weight and compared with the expected number of coins in the hopper in order to determine if the player has inappropriately been withholding or taking coins from the slot machine. If any unexpected coin discrepancy is detected by the weighing apparatus of the present invention, it can be communicated to appropriate security personnel in real time through a computer hook-up or alarm or, alternatively, communicated periodically through downloading of stored hopper weight information.

A further understanding of the nature and advantages of the present inventions may be realized by reference to the remaining portions of the specification and the attached drawings.

### BRIEF DESCRIPTION OF THE DRAWINGS

**FIG. 1** is a front view of a slot machine with its door open showing a coin hopper and integrated weighing apparatus of the present invention.

**FIG. 2** is a more detailed side view of the coin hopper shown in FIG. 1 illustrating the cantilevered mounting of the integrated weighing apparatus of the present invention onto the coin hopper,
load cells.

**FIG. 3** is a schematic diagram of the accompanying electronics for the weighing apparatuses shown in **FIGS. 1-2.**

**FIG. 4** is a flowchart of an accounting process for to detect coin hopper theft in a timely manner.

**FIG. 5** is a flowchart of a process for automatically taking periodic measurements to determine a coin count in the hopper.

**FIG. 6** is a flowchart of a process for calibrating a hopper's tare weight and a per coin weight.

**FIG. 7** is a flowchart of a process for obtaining an accurate hopper weight during calibration in the presence of noise and/or vibrations.

**FIG. 8** is a flowchart of a process for obtaining an accurate coin count in the presence of noise and/or vibrations.

### DESCRIPTION OF THE PREFERRED EMBODIMENTS

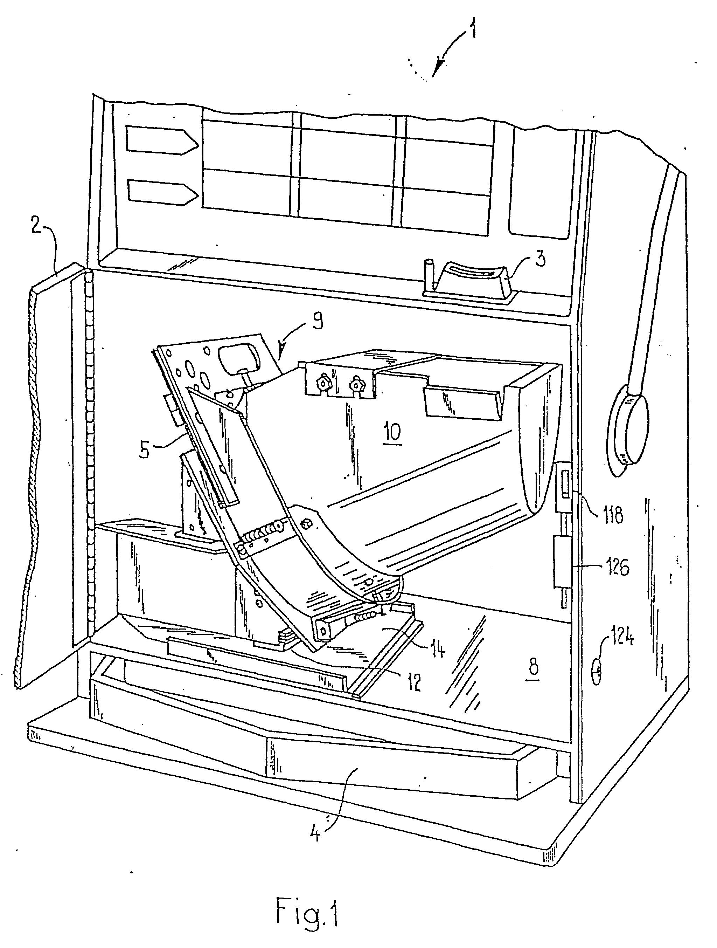

**FIG. 1** illustrates a coin hopper assembly **9** in a slot machine **1** which incorporate an integrated form of coin weighing apparatus **12** of the present invention. This coin hopper assembly **9** includes a coin hopper **10**, hopper base plate **14** and integrated coin weighing apparatus **12**. To show the placement of the hopper assembly **9** in the slot machine **1**, the hopper door **2** of slot machine **1** is shown in an open position. Nonetheless, during operation, the hopper door **2** would usually be locked shut to prevent theft of coins. As shown here, coin hopper **10** is often placed below a coin insertion slot **3** and above a coil payout tray **4**.

To initiate play of a game, a player would insert one or more coins into coin insertion slot **3** and those coins would drop into coin hopper **10.** Although not shown in **FIG. 1**, the coins would typically pass through a coin handling unit on their way to coin hopper **10**. This coin handling unit performs tests (size, weight, angular momentum, etc.) to determine if the coin is real and of the proper denomination. The coin handling unit, or other device, would provide a signal, such as an electric "coin in" pulse, to a logic board to indicate that a valid coin has been inserted (See, ***FIG*. *9)*.**

If the game is a winning game, or the player cashes out his or her credits, coin hopper **10** ejects the correct amount of coins from ejection slot **5** into payout tray **4**. In some embodiments, such as so-called "slant-top" slot machines, the hopper **10** is actually located below the payout tray and an "elevator" or "escalator" mechanism is used to raise the paid out coins higher than the payout tray so that the coins will fall into the payout tray, and thus be accessible to the player. Typically, a motorized conveyor assembly (not shown) of coin hopper **10** causes coins to be ejected to the payout tray or elevator and that conveyor assembly runs until a "coin out" counter indicates that the correct number of coins have been ejected.

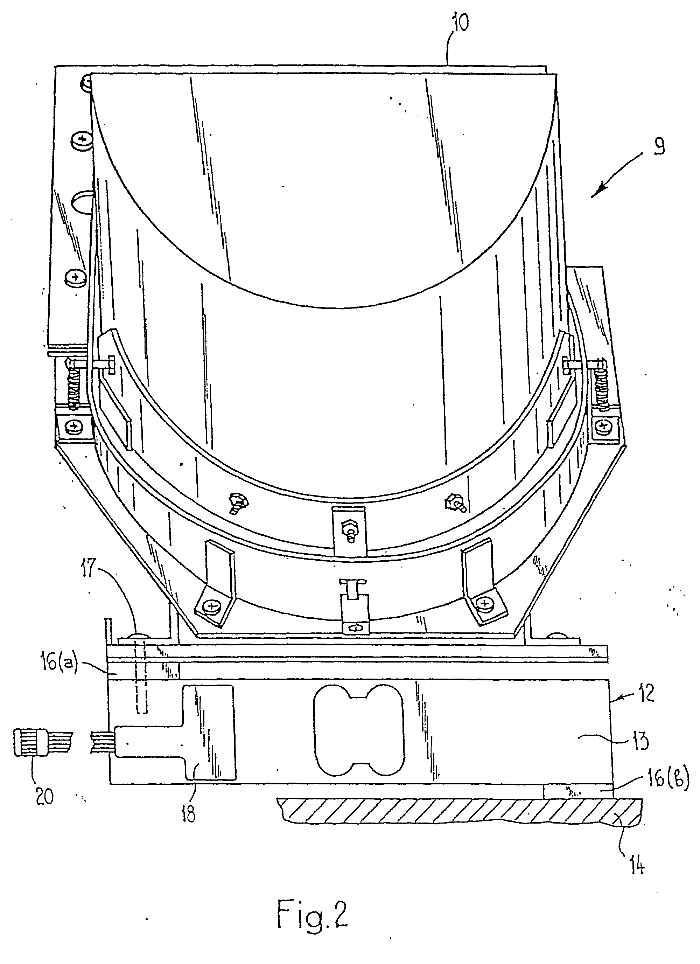

**FIG. 2** provides a close-up view of how the integrated form of coin weighing apparatus **12** of **FIG. 1** is mounted in the coin hopper assembly **9.** In this preferred embodiment, the coin weighing apparatus **12** includes a load cell **13** and strain gauge **18**. This coin weighing apparatus **12** is mounted between the coin hopper **10** and hopper base plate **14**. The coin weighing apparatus **12** is affixed to the coin hopper **10** by a cantilevered spacer **16(a)** and an appropriate fastener **17**. At its diagonally opposite end, the coin weighing apparatus **12** is also affixed to the hopper base plate **14** by a cantilevered spacer **16(b)** and an appropriate fastener (not shown). In this arrangement, coin hopper **10** is totally supported by cantilever spacer **16(a),** which is in turn totally supported by coin weighing apparatus **12**, which is turn totally supported by cantilever spacer **16(b)** mounted directly to base **14**. Thus, the weight of the coin hopper **10** and its coins is applied to the load cell **13** of the coin weighing apparatus **12** causing a strain on the load cell **13** which is a function of the weight of the coin hopper **10** and its coins. That strain is measured by a strain gauge **18** and electrically conveyed to a suitable electronic monitoring apparatus (not shown) by the lines of cabling **20**. In this preferred embodiment, load cell **12** might suitably be a Model 1040 digital load cell or Model 1041 analog load cell manufactured by Tedea Huntleigh of Canoga Park, California. Alternatively, the load cell **12** might suitably be a 36-kilogram analog load cell sold by HBM, Inc. of Connecticut with a Cirrus Logic strain gauge sensor. For larger coin hoppers **12**, a 72-kilogram analog load cell sold by HBM, Inc. might be used. Compression, sub-miniature and strip sensor types of load cells may suitably be used with the weighing apparatus of the present invention.

The coin weighing apparatus **12** shown in **FIGS. 1** and **2** is referred to as "integrated" into the coin hopper assembly **9** because it is situated between the coin hopper **10** and hopper base plate **14**. For existing slot machines, installation of this integrated form of coin weighing apparatus **12** typically involves removing the coin hopper assembly **9** from the slot machine **1** and separating the coin hopper **10** from the hopper base plate **14.** The coin weighing apparatus **12** can then be integrated into the coin hopper assembly **9** by affixing it to the coin hopper **10** and hopper base plate **14** as shown in **FIG. 2**.

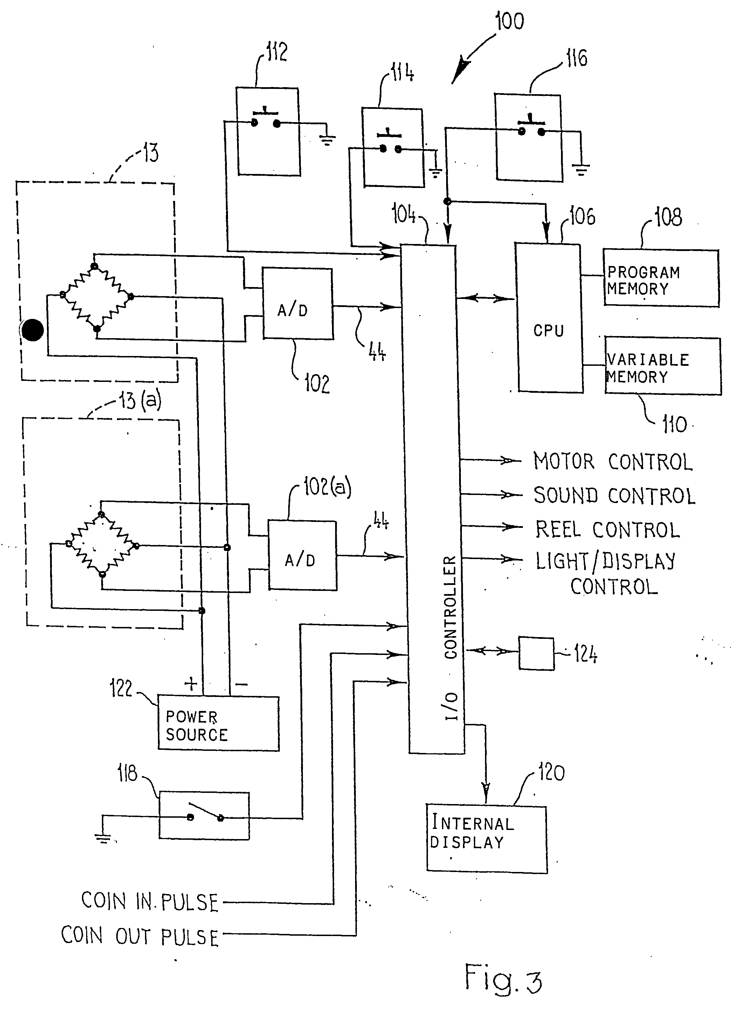

Referring now to **FIG. 3**, a schematic of a preferred logic board **100** used in the present invention is shown. In an alternative embodiment, the role of the logic board is subsumed into a central slot machine control system. The logic board comprises an analog-to-digital converter **102** (A/D) coupled to load cell **13** to convert a load signal from an analog signal to a digital load cell sample. In the preferred embodiment, the digital load cell sample has a resolution of 20 bits, but other resolution analog-to-digital converters can also be used (e.g., 14 bits or greater). With a lower resolution 14 bit digital load cell, an integer corresponding to the digital load cell sample can range from 0 to 16,383. With proper calibration and proper selection of load cell **13**, a fully loaded hopper will cause a reading near the top end of the range, so as to have the best resolution.

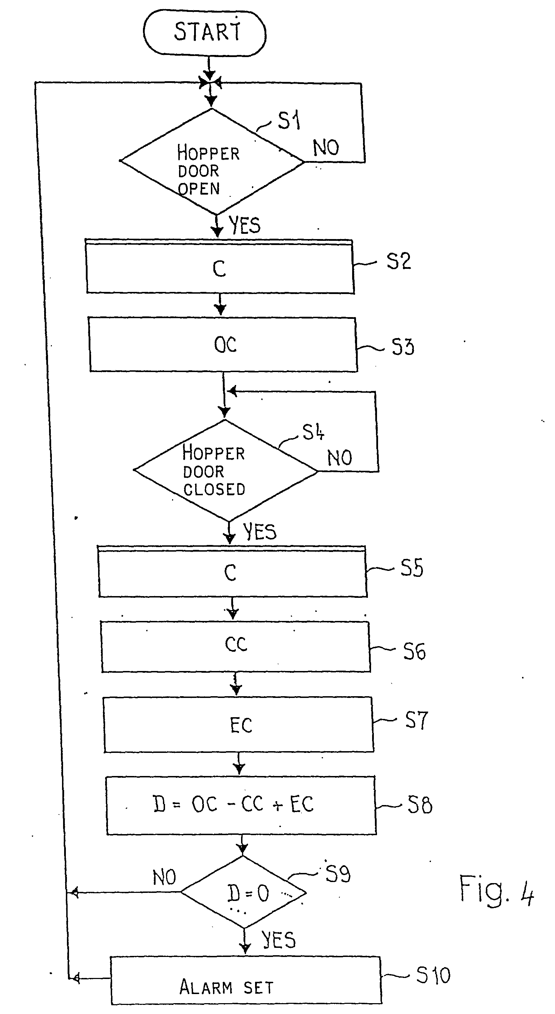

A/D **102** provides its output to an input-output (I/O) controller **104** which in turn provides samples, as requested, to a central processing unit (CPU) **106.** A suitable I/O controller for the present invention would be a 75HCT245 chip. CPU **106** executes programs stored in program memory **108** and uses a variable memory **110** to store data incident to the execution of those programs.
The programs executed by CPU **106** comprise instructions for following the processes described in **FIGS. 4-8**, however CPU **106** might also execute other programs not described herein. In some embodiments, a CPU with built-in I/O control functions and/or memory might be used, however the description of **FIG. 3** still applies to such integrated systems.

**FIG. 3** shows a number of I/O signals being provided to, or by, I/O controller **104**. For example, "Coin In" and "Coin Out" signals are provided from coin handling devices. These signals can be pulses (one pulse per coin) or can be other signals indicating a count, as are well known in the art. I/O controller **104** might also provide motor, sound, reel, lights and display control signals, if CPU **106** or I/O controller **104** are programmed to handle such functions of slot machine **1.** I/O controller **104** receives switch signals from a variety of sources, of which a calibration switch **112**, a start switch **114**, a reset switch **116** and a door switch **118** are shown. **FIG. 3** also shows an internal display **120**.

Also shown in **FIG. 3** is a drop box load cell **13(a)** and an A/D **102(a)** coupled to I/O controller **104.** A drop box is a standard part of some slot machines and is used to contain the overflow of coins from a hopper. For example, in **FIG. 1**, a drop box might have been installed below coin hopper **10**. A drop box is similar to a hopper, in that it holds a collection of coins, but differs from a hopper in that coins are not ejected from the drop box. If a drop box is used, a hopper may have a sensor, such as a coin weighing apparatus of the present invention, which detects when the hopper is full. If the hopper is full, coins are ejected from the hopper in such a way that the ejected coins fall into the drop box instead of into payout tray **4.** Drop box load cell **13(a)** performs a function similar to the coin hopper load cell **13** insofar as it provides an indication of the weight of a drop box (not shown) and the coins therein. This drop box load cell **13(a)** may preferably be configured in any of the ways previously described. Along the same lines, a coin weighing apparatus of the present invention could be used to weigh coin fill bags which are stored in the slot machine to conveniently replenish empty coin hoppers as well as other types of drop containers. Theft or fraud can be detected by such a coin weighing apparatus when the weight of the fill bag changes without good cause.

I/O controller **104** also reads/writes data from a data pin **124** (see **FIG. 1**). In a preferred embodiment, data pin **124** is part of a communication system manufactured by Dallas Semiconductor. A data wand (not shown) is a hand-held, battery-powered device with an internal computer which communicates with I/O controller **104** through a single signal line and chassis ground connection. In one application, a data wand can be used in conjunction with data pin **124** to calibrate the coin weighing apparatus **12, 22, 43, 50.**

In operation, load cells **13, 13(a)** are provided with load cell power from a load cell power source **122** and generate an analog voltage which is a function of their load. This analog voltage is input to the load cell's A/D **102** or **102(a).**
**FIG. 4** is a flowchart of a process for detecting coin fraud or theft by a service technician. This process is controlled by CPU **106** according to instructions stored in program memory **108.** Each step in **FIG. 4** is numbered with a sequential step number, except where noted. The process shown in **FIG. 4** begins when hopper door **2** (see ***FIG*. *1*)** is opened **(S1).** This process assumes that the primary mode of coin theft is from dishonest technicians or other casino employees opening slot machine door **2** to perform actual or purported maintenance and taking coins from hopper **10** while hopper door **2** is open. Presumably, a game cannot be played and a payout cannot be made while door **2** is open and therefore a coin count should not change except in cases of authorized coin withdrawal. In a preferred embodiment, hopper door **2** is secured by an electronic switch, such as a solenoid **126** (see ***FIG. 1****),* which can only be activated by the technician or employee touching their assigned data wand to data pin **124.** As part of the opening process, CPU **106** records an employee ID communicated from the data wand before activating solenoid **126** to open hopper door **2**. Alternatively, hopper door **2** can be opened by an ordinary key and the door opening can be detected by door switch **118**. In either case, a preferred embodiment records the time of opening.

When hopper door **2** is being opened **(S1),** or preferably just before hopper door 2 moves, a coin count (C) is obtained **(S2)** and the count is stored **(S3)** as the opening count (OC). If CPU **106** makes continuous, periodic readings, then the opening count (OC) might just be the most recent periodic reading before hopper door **2** was opened and after the last game was played.

At step **S4,** the door is monitored until it is closed, and another coin count is taken **(S5).** In a preferred embodiment, this second coin count is a reading taken after slot machine **1** has stabilized following the closing of the door. This coin count, C, is stored **(S6)** as the closing count (CC). Next **(S7),** an expected change count (EC) is determined. This expected change count is positive in the case where a technician is sent to a slot machine to add coins to a depleted hopper, is negative where the technician is sent to the slot machine to remove coins, and is zero where the technician is sent to the slot machine simply to perform maintenance. Of course, other variations of this scheme are also possible. For example, the expected change count might not be known at the time the coins are removed, but later determined after the technician turns over the coins removed from the slot machine.

If the expected change count is known at the time the door is closed, a deficiency can be easily calculated **(S8),** by subtracting the closing count (CC) from the opening count (OC) and adding the expected change count (EC). If the resulting deficiency (D) is not equal to zero **(S9),** then an alarm can be set **(S10).** Where the slot machine does not automatically determine the identification of the technician or other employee opening the slot machine, the setting of an alarm might result in a flashing light on the slot machine being immediately activated, so that the unauthorized removal of coins can be detected by a floor manager while the thief is still present at the machine. However, in a preferred embodiment, the slot machine detects the time of opening and closing as well as the identification of the person opening the machine, thereby allowing the deficiency to be easily traced to a specific employee. In an alternate embodiment, where the slot machine is not able to determine the identity of the person opening the slot machine, the slot machine will merely record the time of entry and the deficiency for later comparison to a log kept elsewhere showing which employees had access to which slot machines at which times. In a preferred embodiment, the alarm is not merely a local alarm in the form of a flashing light on the slot machine or the like, but is an alarm which is recorded by CPU **106** and is communicated to a central security station (not shown). Regardless of whether an alarm is set or not, the flow of the process returns to step **S1,** where it remains until the hopper door is again opened.

While the process shown in **FIG. 4** will detect unauthorized removal of coins when a hopper door **2** is open, it does not necessarily detect unauthorized removal of coins when hopper door **2** is closed. The latter type of unauthorized coin removal might arise when the dishonest employee or technician modifies the slot machine to eject or reroute coins out of the hopper **10** into other spaces inside slot machine **1** for later retrieval. This latter type of closed door removal may also occur when a dishonest player tampers with the coin in or coin out mechanisms of the slot machine. This manner of closed door theft can be counteracted by monitoring the rate at which coins fail to reach hopper **10** or fail to be counted as they are ejected by comparing hopper weight to the "coin in" or "coin out" pulses to the I/O controller **104** and CPU **106 (FIG. 3).** Similarly, if a dishonest player inserts slugs or other types of counterfeit coins into the slot machine which have a different weight than valid coins, a comparison of the expected weight of valid coins in the coin hopper with the actual weight of counterfeit coins in the coin hopper can be used to detect this type of fraud. With centralized monitoring of slot machine activity, the unaccounted for loss of coins or discrepancy in coin weight while hopper door **2** is closed can be monitored for each slot machine and those slot machines with higher than normal rates of coin loss or coin weight discrepancy can be carefully inspected. Coin loss from the hopper to the drop box during normal operation can be accounted for through the use of load cell **13(a)** and ADC **102(a)**, as described above.

In a preferred embodiment, the slot machine activity is communicated to a central security station for easy monitoring and prompt detection of deficiencies. The automatic coin accounting process of **FIG. 4** is a process which can be run independently of the coin counting processes shown elsewhere. The use of the present invention to handle other modes of theft or coin accounting should be apparent after reading this present description.

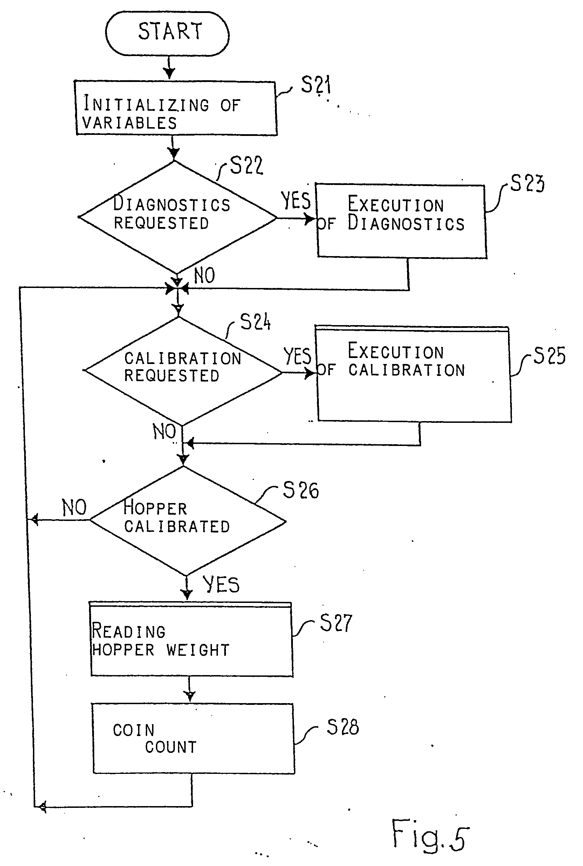

While **FIG. 4** shows a process of deficiency detection, **FIG. 5** shows a more general process of taking a reading to calculate coin count C. In a preferred embodiment, the processes of **FIG. 4** and the processes of **FIG. 5** run asynchronously, with the process shown in **FIG. 5** being a process of periodically taking a reading to update the current coin count while the process shown in **FIG. 4** (more specifically steps **S2** and **S5)** merely refers to an episodic coin count when the slot machine door **2** is opened or closed.

Referring now to **FIG. 5,** the process shown therein begins with an initialization of the variables used **(S21).** At this point, the operator is prompted with "START" or a similar prompt, prompting the operator to begin the calibration process. The prompt is displayed, in some embodiments, on a computer terminal, while in other embodiments it is displayed on an internal display **120** coupled to I/O **104** (see ***FIG*. *3*).** Preferably, the operator first determines that the hopper and slot machine are stable and the hopper is empty.

At step **S22,** CPU **106** (see ***FIG.* 3**) determines whether diagnostics were requested by the operator. In one embodiment, the operator signals that diagnostics are requested by sending a predetermined signal from a terminal to I/O controller **104** such as through the data pin I/O or by simultaneously pressing calibration button **112** and start button **114** (see ***FIG*. *3***). If diagnostics are requested, CPU **106** executes those diagnostics **(S23)** and proceeds to step **S24.** Otherwise, if diagnostics are not requested, CPU **106** proceeds directly to step **S24.**

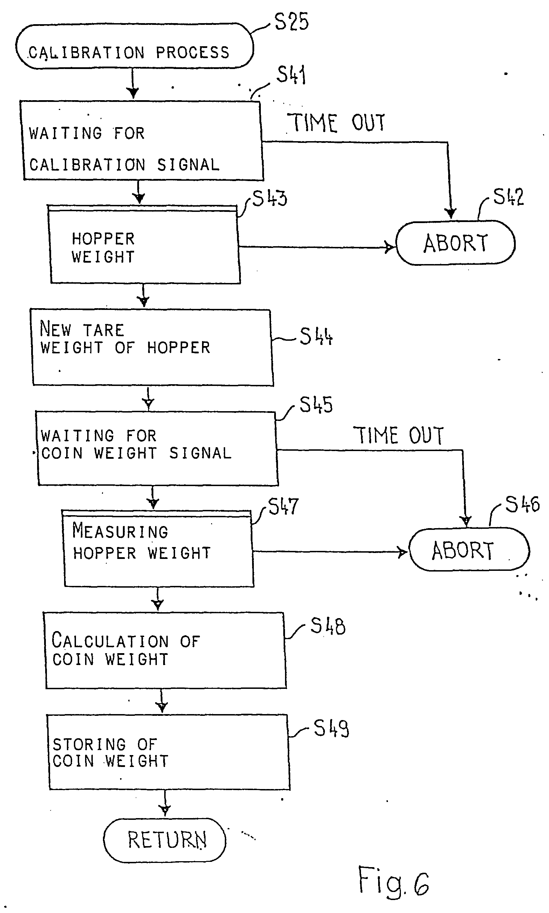

At step **S24,** CPU **106** checks to see if the operator has requested a calibration. In the embodiment shown in **FIG. 6**, the operator requests calibration by pressing calibration button **112**. If calibration is requested, the calibration process is executed **(S25)** to determine a tare weight (TW) and a per coin weight (CW). Following the calibration step, which is described in further detail in **FIG. 6** or if calibration is not requested, CPU **106** proceeds to step **S26,** where it determines whether or not the hopper was calibrated. If the hopper was not calibrated, either because calibration was not requested or because the calibration step was not successful due to unreliable readings, CPU **106** returns to step **S24,** thus creating a loop that is only exited when the hopper is finally calibrated.

When the loop is exited, CPU **106** proceeds to step **S27**, where a reading of the hopper weight is taken and a coin count is calculated. This process is shown in further detail in **FIG. 6.** Once a reliable coin count is obtained **(S28),** that coin count is displayed, transmitted to a remote storage and/or display device or the coin count is simply stored in variable memory **110** (see ***FIG*. *3*)** for later provision of a coin count value to other processes which use the coin count. Once the coin count is obtained and processed as described above, CPU **106** returns to step **S24.** Thus, while the hopper remains calibrated, CPU **106** executes a periodic loop of taking a reading, calculating a coin count, and providing the coin count to various display or memory devices as needed. In a preferred embodiment, a latest reliable value for the coin count is retained and is not overwritten by any subsequent unreliable coin counts, thereby providing a reliable coin count value which can be polled at any time by asynchronous processes.

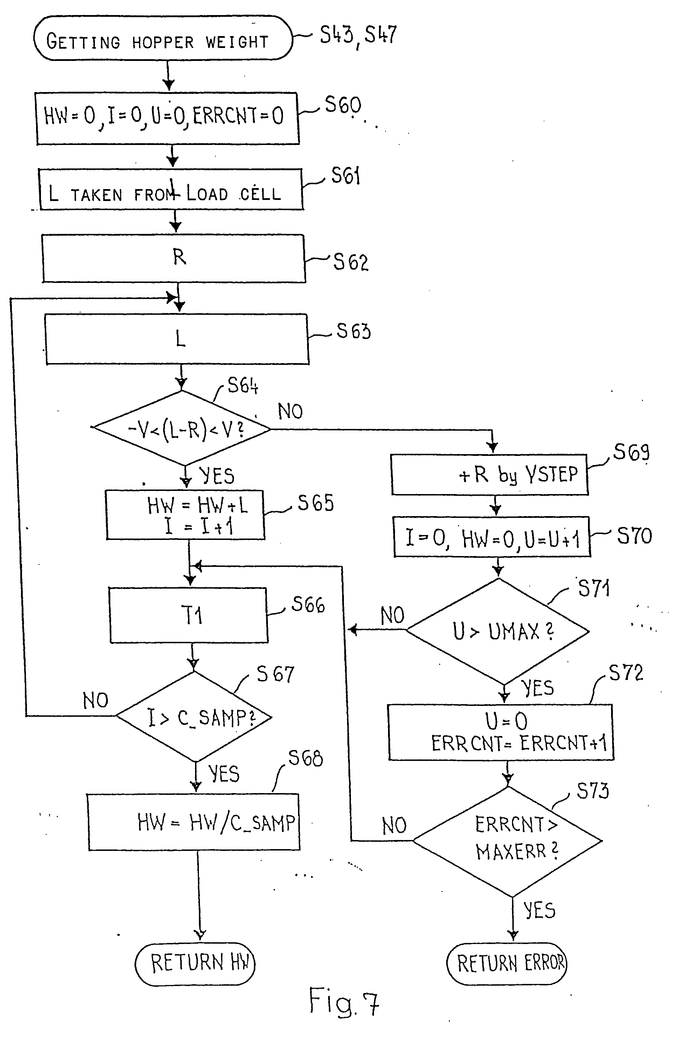

**FIG. 6** shows the calibration process of step **S25** in further detail. At the outset of the calibration process, CPU **10**6 waits (**S41)** for a calibration signal, either from a remote device or from the operator pressing calibration switch **112**. If the calibration signal is not received within a predetermined time, the calibration process is aborted and an indication that calibration did not complete is given so that readings (see ***FIG. 5*)** will not be taken until the calibration process actually successfully completes. If the calibration signal is received, CPU **106** proceeds to obtain the hopper weight **(S43),** which is described in further detail in **FIG. 7**. Prior to receipt of the calibration signal, the hopper should have been emptied by the operator so that a tare weight of the hopper can be obtained. Also, if the calibration signal is sent using calibration switch **112,** CPU **106** delays for a predetermined time to allow for dampening of slot machine vibrations due to calibration switch **112** being pressed. If the hopper weighing process returns an error indicating that a reliable hopper weight cannot be obtained, CPU **106** aborts the calibration process **(S42).** However, if a reliable hopper weight is obtained, that hopper weight is stored as the new tare weight (TW) value for the hopper **(S44).**

Once the hopper tare weight is obtained, CPU **106** waits for a COIN WEIGHT signal **(S45),** and when the COIN WEIGHT signal is received, CPU **106** again measures the hopper weight **(S47).** Before the COIN WEIGHT signal is sent, the process expects that the hopper now contains N coins. In a preferred embodiment, N=20, however it should be apparent that other values of N could be used. If a time out occurs while waiting for the COIN WEIGHT signal or the hopper weighing process returns an error, the calibration process is aborted **(S46)** and only the tare weight is updated. Where a hopper is modified or moved to a different slot machine, the calibration procedure could be allowed to abort at step **S46,** without ill effects, since the prior per coin weight can be reused.

Once the hopper weight is obtained **(S47)** for the hopper and the N coins, a coin weight is calculated **(S48)** by subtracting the hopper tare weight (TW) from the just measured hopper weight (HW) and dividing the difference by N. This new per coin weight (CW) is then stored (**S49**) in variable memory **110**, preferably compared with a known per coin weight, and, if the measured per coin weight favorably compares with the known per coin weight, the calibration process returns indicating a successful hopper calibration.

**FIG. 7** shows the process of getting a hopper weight, the result being either returning successfully with a hopper weight (HW) or returning an error indicating that the hopper was too unstable for a measurement to have been taken.

At the beginning of the process, the variables used for temporary storage and loop control are initialized (**S60**) and a sampled digital value, L, is taken from load cell **13** (**S61**). As should be apparent from this description, the processes of **FIGS. 4-8** are equally applicable to coin accounting using a drop box, with the main difference being that load cell **13(a)** is sampled instead of load cell **13**. The sampled value L is stored as a reference reading R **(S62),** and a main loop is entered.

In the main loop, the load cell is again sampled **(S63)** to obtain a new value for L. If the absolute value of the difference between L and the reference reading R is less than a variance limit, V, then the sampled value L is added to an accumulator (HW) and a loop counter (I) is incremented **(S65).** CPU **106** then pauses for a predetermined delay period of T1 milliseconds **(S66)** and then loops back to step **S63** to take another reading. This continues until a predetermined number, C_SAMP, of readings has been taken. Once C_SAMP readings have been taken and accumulated, the value in the accumulator (HW) is divided by C_SAMP **(S68),** to yield a hopper weight. In a preferred embodiment, the digital values L and R are integers ranging from zero to **16,383**, the variance threshold V is 120, T1 is 100 milliseconds and C_SAMP=40.

If the absolute value of the difference between L and R is greater than or equal to V, indicating too much variance between a sampled weight and a reference weight, the reference weight is adjusted by an increment VSTEP **(S69).** More specifically, R is adjusted so that the absolute value of the difference between L and R is reduced by VSTEP, i.e., if R is greater than L by more than V, R is reduced by VSTEP and if R is less than L by more than V, R is increased by VSTEP. In a preferred embodiment, VSTEP=10.

Following the adjustment of R, the loop counter (I) and the accumulator (HW) are zeroed **(S70)** and an unstable reading counter, U, is incremented. If the unstable reading counter U is not greater than a maximum UMAX, then CPU **106** reenters the main loop just before step **S66.** Otherwise, if U is greater than UMAX, U is reset to zero and an error count (ERRCNT) is incremented **(S72).** If the error count is greater than a maximum error value (ERRCNT > MAXERR), the hopper weight process ends and an error indication is returned. Otherwise, CPU **106** reenters the main loop just before step **S66.** In a preferred embodiment, UMAX=40 and MAXERR=4. Also, in a preferred embodiment, as instability is detected, the operator is provided with an indication, such as a display "UNST", to indicate that instability is being detected, thereby giving the operator the opportunity to eliminate the source of instability while a reading is being taken. Assuming a valid hopper weight reading is obtained, this can be used in the calibration process shown in **FIG. 6**.

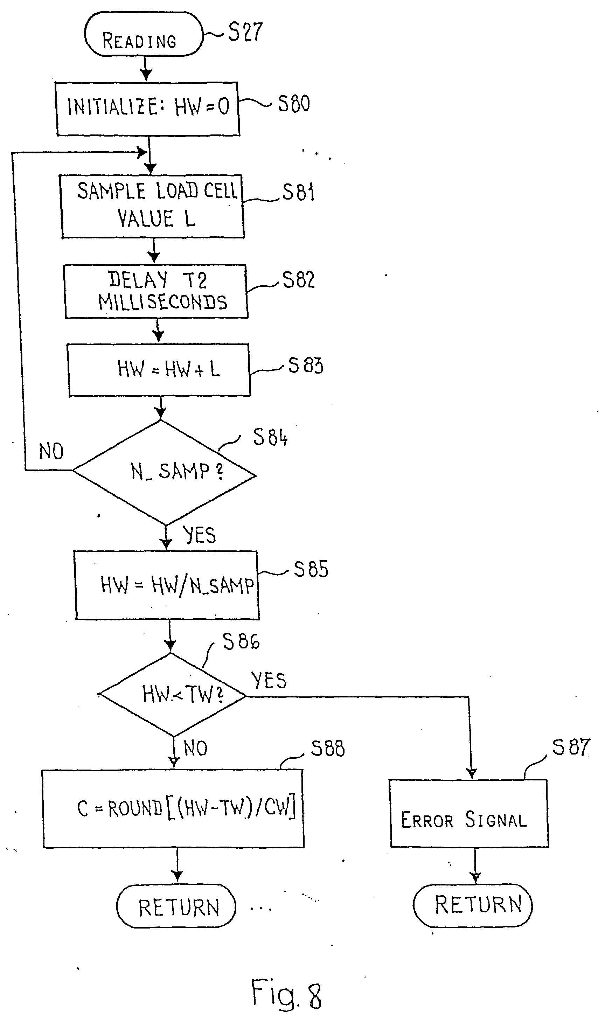

**FIG. 8** shows the process of taking a reading, which results in either a coin count C being returned or an error indication being returned. At the outset of this process an accumulator (HW) and a loop counter (not shown) are initialized. In the main loop (shown as steps **S81, S82, S83)** a load cell is sampled to obtain a value L, CPU **106** delays for T2 milliseconds, and the sampled value L is added to the accumulator (HW). This loop repeats until N_SAMP samples are taken. In a preferred embodiment, T2 is 200 milliseconds and N_SAMP=30.

Once N_SAMP samples are taken, the accumulator (HW) is divided by N_SAMP **(S85)** and the resultant hopper weight (HW) is compared to the hopper tare weight **(S86).** If the hopper weight HW is less than the tare weight TW, an error signal is generated **(S87),** otherwise a coin count C is calculated according to the formula:

C=ROUND((HW - TW)/ CW).

Of course, other suitable formulae can be used. The hopper weight reading process of **FIG. 8** is less interactive and less error-correcting than the hopper-weight reading process of **FIG. 6**, since the former generally occurs when the slot machine is not open and an unreliable reading can be discarded without ill effects, whereas the latter process provides tare weight and per coin weights which cannot be as easily discarded.

Thus, in the manner described above, a hopper is weighed periodically and that weight is used, combined with an automatically determined per coin weight, to determine a number of coins in the hopper. In one specific use of the coin count, coins are counted as the hopper door is opened and then counted again after the hopper door is closed and this difference is compared to an authorized difference to determine if unauthorized removal of coins from the hopper while the hopper door was open occurred. One application of this system includes a centralized slot machine control system, from where a trusted employee can monitor the opening and closing of each slot machine door, as well as a current inventory of the coins in the hopper and/or drop box of each slot machine. The necessary information can be communicated from the slot machines to the centralized slot machine control system through dedicated communication lines running fron each slot machine or can be provided by the above described data pin system.

## Claims

1. A weighing apparatus in a gaming, amusement or vending machine comprising:
an upper plate supporting a coin hopper **(10);**
a base **(14);**
an elongated load cell **(12)**, incorporating a strain gauge, interposed between and attached to both said upper plate and said base,
spacers **(16a, 16b)** interposed between said load cell and each of said upper plate and said base, wherein
said load cell **(12)** being in the shape of a rectangular prism and wherein diagonally opposite edges of said load cell being attached to said upper plate and said base **(14),**
**characterized**
in that the load cell **(12)** is arranged with it's long dimension perpendicular to the longitudinal axis of the coin hopper.

2. The weighing apparatus in accordance with claim **1**,
whereby that said gaming, amusement or vending machine is a slot machine, preferably an amusement with payout machine.

3. The weighing apparatus in accordance with claim **1**,
whereby it further comprises an analog-to-digital converter connected to said strain gauge.

4. A method of coin theft detection in a gaming, vending or amusement machine, said machine comprising a weighing apparatus in accordance with claim **1**, said method comprising the steps of
a first weighing step of weighing coins in a coin hopper of said gaming machine using a weighing apparatus which is built into said coin hopper, thereby measuring a first weight;
a first calculating step of calculating a number of coins in the coin hopper based on the first weight, resulting in a first count;
allowing access to the coins in the coin hopper;
a second weighing step of weighing coins in a coin hopper of said gaming machine using a weighing apparatus which is built into said hopper, thereby measuring a second weight;
a second calculating step of calculating a number of coins in the coin hopper based on the second weight, resulting in a second count; and
setting an alarm if the second count is less than the first count minus an authorized number of removed coins.

5. The method in accordance with claim **4**, wherein the first and second steps of weighing coins are steps of weighing coins of known unit weight.

6. The method in accordance with claim **4**, wherein the first and second steps of weighing coins are steps of weighing coins and the coin hopper.

7. The method in accordance with claim **4**, wherein the steps of weighing coins comprise the substeps of:
measuring an acceleration of the coin hopper relative to the gaming machine; and
measuring a distortion of a cantilever beam which is distorted by the weight of the coin hopper and the coins therein when the acceleration of the coin hopper relative to the gaming machine is essentially zero or is a known acceleration.

8. The method in accordance with claim **4**, comprising the steps of:
detecting a door being opened;
substantially simultaneously with the door being opened, measuring a first number of coins in the coin hopper by weight using a coin weighing apparatus which is built into said coin hopper;
detecting the door being closed;
measuring a second number of coins in the coin hopper by weight after the closing of the door is detected using a coin weighing apparatus which is built into said coin hopper; and
determining a difference in coin count by subtracting the first count from the second count and electronically reporting the difference to a theft control system.

9. The method in accordance with claim **8,** wherein the step of reporting the difference comprises the step of setting an alarm.

10. The method in accordance with claim **9**, wherein the step of setting alarm is a step of setting a flag in a field of a row of a data table associated with the gaming machine in which the difference is detected.

11. The method in accordance with claim 4, comprising the steps of:
weighing coins in a coin hopper of said gaming machine using a coin weighing apparatus which is built into said coin hopper to determine a baseline weight at the start of a detection period;
calculating a baseline coin count from the baseline weight;
recording a number of inserted coins;
recording a count for each authorized withdrawal of payout;
calculating an expected coin count by subtracting the count for each authorized withdrawal or payout from the baseline coin count and adding the number of inserted coins thereto;
weighing coins in the hopper at the end of the detection period to determine a final hopper weight using a coin weighing apparatus which is built into said coin hopper;
calculating a final coin count from the final hopper weight; and
determining a discrepancy amount for the detection period by subtracting the final coin count from the expected coin count.

12. The method in accordance with claim **11**, further comprising the step of reporting the discrepancy amount as a coin theft amount.

13. The method in accordance with claim **4**, to detect coin theft from a fill bag in the gaming, amusement or vending machine, comprising the steps of:
a first weighing step of weighing coins in a fill bag in said machine,
a first calculating step of calculating a number of coins in said fill bag based on the first weight, resulting in a first count;
allowing access to said fill bag;
a second weighing step of weighing coins in said fill bag after allowing access, thereby measuring a second weight;
a second calculating step of calculating a number of coins in said fill bag based on the second weight, resulting in a second count; and
setting an alarm if the second count is less than the first count minus an authorized number of removed coins.

14. A method in accordance with claim **4** for of detecting insertion of counterfeit coins into a coin hopper of a gaming, amusement or vending machine comprising the steps of:
ascertaining the weight of a valid coin;
sensing the number of coins inserted into said machine;
weighing the total number of coins collected in said coin hopper of said machine;
dividing the weight of coins collected in said coin hopper by the number of coins sensed to determine the average weight of coins in said coin hopper;
comparing the average weight of coins in said coin hopper to the weight of a valid coin to ascertain whether counterfeit coins are being inserted into said coin hopper.

15. The method of claim **14**, further comprising the step of adjusting the difference to account for authorized coin removals.

16. The method of claim **15**, further comprising a step of setting an alarm when the difference is greater than zero.

17. The method of claim **16,** wherein the step of setting an alarm is a step of, setting a flag in a field of a row of a data table associated with the gaming machine in which the difference is detected.

18. The method of claim **17,** comprising the weighting apparatus of claim **1** and further comprising the steps of:
weighing coins in a coin hopper of said gaming machine using a coin weighting apparatus which is built into said coin hopper to determine a baseline weight at the start of a detection period;
calculating a baseline coin count from the baseline weight;
recording a number of inserted coins;
recording a count for each authorized withdrawal of payout;
calculating an expected coin count by subtracting the count for each authorized withdrawal or payout from the baseline coin count and adding the number of inserted coins thereto;
weighing coins in the hopper at the end of the detection period to determine a final hopper weight using a coin weighing apparatus which is built into said coin hopper;
calculating a final coin count from the final hopper weight; and
determining a discrepancy amount for the detection period by subtracting the final coin count from the expected coin count.

19. The method of claim **18**, further comprising the step of reporting the discrepancy amount as a coin theft amount.

## Patentansprüche

1. Wägevorrichtung in einem Spiel- Unterhaltungs- oder Verkaufsautomaten, umfassend:
eine obere Platte, die einen Münzenspeicher (10) trägt;
eine Basis (14);
eine längliche Lastzelle (12), enthaltend einen Dehnungsmesser, der zwischen oberer Platte und Basis angeordnet und an beiden befestigt ist;
Abstandstücke (16a, 16b), die zwischen der Lastzelle und der oberen Platte und der Basis angeordnet sind, wobei
die Lastzelle (12) die Form eines rechteckigen Prismas aufweist und diagonal gegenüberliegende Ränder der Lastzelle an der oberen Platte und an der Basis (14) befestigt sind,
dadurch gekennzeichnet, dass
die Lastzelle (12) mit ihrer langen Dimension im rechten Winkel zur Längsachse des Münzenspeichers angeordnet ist.

2. Wägevorrichtung nach Anspruch 1, wobei der Spiel-, Unterhaltungs- oder Verkaufsautomat ein Münzautomat ist, vorzugsweise ein Unterhaltungsautomat mit Auszahlungsfunktion.

3. Wägevorrichtung nach Anspruch 1, wobei diese des weiteren einen mit dem Dehnungsmesser verbundenen Analog-Digitalwandler aufweist.

4. Verfahren zur Münzdiebstahlentdeckung in einem Spiel-, Verkaufs- oder Unterhaltungsautomaten, wobei der Automat eine Wägevorrichtung nach Anspruch 1 enthält und das Verfahren folgende Schritte umfasst:
einen ersten Wägeschritt zum Abwiegen der Münzen in einem Münzenspeicher des Spielautomaten unter Verwendung einer in den Münzenspeicher eingebauten Wägevorrichtung, womit ein erstes Gewicht ermittelt wird;
einen erste Berechnungsschritt zur Ermittlung einer Anzahl von Münzen im Münzenspeicher auf Basis des ersten Gewichts, woraus sich eine erste Münzenzahl ergibt;
Freigabe des Zugriffs auf die Münzen im Münzenspeicher;
ein zweiter Wägeschritt zum Abwiegen der Münzen in einem Münzenspeicher des Spielautomaten unter Verwendung einer in den Münzenspeicher eingebauten Wägevorrichtung, wodurch ein zweites Gewicht ermittelt wird;
ein zweiter Berechnungsschritt zur Ermittlung einer Anzahl von Münzen im Münzenspeicher auf Basis des zweiten Gewichts, woraus sich eine zweite Münzenzahl ergibt; und
Einstellung eines Alarms, wenn die zweite Münzenzahl geringer ist als die erste Münzenzahl minus einer zulässigen Anzahl entnommener Münzen.

5. Verfahren nach Anspruch 4, wobei der erste und zweite Schritt des Münzenwägens Schritte des Wägens von Münzen mit bekanntem Einheitsgewicht sind.

6. Verfahren nach Anspruch 4, wobei der erste und der zweite Schritt des Münzenwägens Schritte des Wägens von Münzen und des Münzenspeichers sind.

7. Verfahren nach Anspruch 4, wobei die Schritte des Münzenwägens folgende Teilschritte umfassen:
Messen einer Beschleunigung des Münzenspeichers im Verhältnis zum Spielautomaten; und
Messen einer Verformung eines Tragebalkens, der durch das Gewicht des Münzenspeichers und der darin enthaltenen Münzen verformt wird, wenn die Beschleunigung des Münzenspeichers im Verhältnis zum Spielautomaten im wesentlichen Null oder eine bekannte Beschleunigung ist.

8. Verfahren nach Anspruch 4, umfassend die Schritte:
Feststellen einer geöffneten Türe;
im wesentlichen gleichzeitig mit dem Öffnen der Tür Messen einer ersten Münzenzahl im Münzenspeicher nach Gewicht unter Verwendung einer in den Münzenspeicher eingebauten Münzwägevorrichtung;
Feststellen der geschlossenen Tür;
Messen einer zweiten Münzenzahl im Münzenspeicher nach Gewicht, nachdem das Schließen der Tür festgestellt wurde, unter Verwendung einer in den Münzenspeicher eingebauten Münzwägevorrichtung; und
Feststellen einer Differenz der Münzenzahl durch Subtrahieren der ersten Zahl von der zweiten Zahl und elektronische Meldung der Differenz an ein Diebstahlkontrollsystem.

9. Verfahren nach Anspruch 8, wobei der Schritt der Meldung der Differenz den Schritt der Einstellung eines Alarms umfasst.

10. Verfahren nach Anspruch 9, wobei der Schritt der Alarmeinstellung ein Schritt des Setzens einer Markierung in einem Feld einer Spalte einer mit dem Spielautomaten verbundenen Datentabelle ist, in dem die Differenz festgestellt wird.

11. Verfahren nach Anspruch 4, umfassend die Schritte:
Wägen der Münzen in einem Münzenspeicher des Spielautomaten unter Verwendung einer in den Münzenspeicher eingebauten Münzwägevorrichtung zur Bestimmung eines Basisgewichts am Beginn einer Erfassungsperiode;
Berechnen einer Basismünzenzahl vom Basisgewicht;
Feststellen einer Anzahl eingeworfener Münzen;
Feststellen einer Münzenzahl für jede autorisierte Entnahme oder Auszahlung;
Berechnen einer erwarteten Münzenzahl durch Subtrahieren der Münzenzahl für jede autorisierte Entnahme oder Auszahlung von der Basismünzenzahl und Addieren der dazu eingeworfenen Münzen;
Wägen der Münzen im Münzenspeicher am Ende der Erfassungsperiode zur Feststellung eines abschließenden Münzenspeichergewichts unter Verwendung einer in den Münzenspeicher eingebauten Münzwägevorrichtung;
Berechnen einer Münzenendzahl aus dem Endgewicht des Münzenspeichers; und
Feststellen eines Diskrepanzbetrags für die Erfassungsperiode durch Subtrahieren der Münzenendzahl von der erwarteten Münzenzahl.

12. Verfahren nach Anspruch 11, des weiteren umfassend den Schritt der Meldung des Diskrepanzbetrags als Münzendiebstahlsbetrag.

13. Verfahren nach Anspruch 4 zur Feststellung eines Münzendiebstahls aus einer Nachfülltasche in dem Spiel-, Unterhaltungs- oder Verkaufsautomaten, umfassend die Schritte:
erster Wägeschritt zum Abwiegen der Münzen in einer Nachfülltasche in dem Automaten;
erster Berechnungsschritt zum Berechnen einer Anzahl von Münzen in der Nachfülltasche auf Basis des ersten Gewichts, woraus sich eine erste Münzenzahl ergibt;
den Zugriff auf die Nachfülltasche ermöglichen;
zweiter Wägeschritt zum Abwiegen der Münzen in der Nachfülltasche nach Gewährung des Zugriffes, dadurch Messen eines zweiten Gewichts;
zweiter Berechnungsschritt zum Berechnen einer Anzahl von Münzen in der Nachfülltasche auf Basis des zweiten Gewichts, woraus sich eine zweite Münzenzahl ergibt; und
Einstellen eines Alarms, wenn die zweite Münzenzahl weniger als die erste Münzenzahl minus einer autorisierten Zahl entfernter Münzen ergibt.

14. Verfahren nach Anspruch 4 zur Feststellung eines Einwurfes falscher Münzen in einen Münzbehälter eines Spiel-, Unterhaltungs- oder Verkaufsautomaten, umfassend die Schritte:
Bestimmung des Gewichts einer gültigen Münze;
Feststellung der Anzahl von Münzen, die in den Automaten eingeworfen wurden;
Wägen der Gesamtanzahl von Münzen, die in dem Münzbehälter des Automaten gesammelt sind; Dividieren des Gewichts der im Münzbehälter gesammelten Münzen durch die Anzahl der festgestellten Münzen, um das Durchschnittsgewicht der Münzen im Münzbehälter zu ermitteln;
Vergleichen des Durchschnittsgewichts der Münzen im Münzbehälter mit dem Gewicht einer gültigen Münze, um zu bestimmen, ob in den Münzbehälter Falschmünzen eingeworfen werden.

15. Verfahren nach Anspruch 14, des weiteren umfassend den Schritt einer Einstellung der Differenz, die für zulässige Münzentnahmen einzurechnen ist.

16. Verfahren nach Anspruch 15, des weiteren umfassend einen Schritt der Einstellung eines Alarms, wenn die Differenz größer als Null ist.

17. Verfahren nach Anspruch 16, wobei der Schritt der Einstellung eines Alarms ein Schritt des Setzens einer Markierung in einem Feld einer Spalte einer Datentabelle ist, die mit dem Spielautomaten verbunden ist, in dem die Differenz festgestellt wird.

18. Verfahren nach Anspruch 17, umfassend die Wägevorrichtung von Anspruch 1 und des weiteren umfassend die Schritte:
Wägen von Münzen in einem Münzenspeicher des Spielautomaten unter Verwendung einer Münzwägevorrichtung, die in den Münzenspeicher eingebaut ist, um ein Basisgewicht zu Beginn der Erfassungsperiode zu bestimmen;
Berechnung einer Basismünzenzahl vom Basisgewicht;
Feststellen einer Anzahl eingeworfener Münzen;
Feststellen einer Münzenzahl für jede autorisierte Entnahme oder Auszahlung;
Berechnen einer zu erwartenden Münzenzahl durch Subtrahieren der Münzenzahl für jede autorisierte Entnahme oder Auszahlung von der Basismünzenzahl und Addieren der dazu eingeworfenen Münzen;
Wägen der Münzen im Münzenspeicher am Ende der Erfassungsperiode zur Feststellung eines Endgewichts des Münzenspeichers unter Verwendung einer in den Münzenspeicher eingebauten Münzwägevorrichtung;
Berechnen einer Münzenendzahl aus dem Endgewicht des Münzenspeichers; und
Feststellen eines Diskrepanzbetrags für die Erfassungsperiode durch Subtrahieren der Münzenendzahl von der erwarteten Münzenzahl.

19. Verfahren nach Anspruch 18, des weiteren umfassend den Schritt einer Meldung des Diskrepanzbetrags als Münzdiebstahlbetrag.

## Revendications

1. Un appareil de pesage, dans une machine à sous, une machine de jeu ou un distributeur automatique, comprenant :
une plaque supérieure supportant un collecteur de pièces (10) ;
un socle (14) ;
une cellule de charge allongée (12) intégrant une jauge de contrainte, insérée et fixée entre ladite plaque supérieure et ledit socle,
des entretoises (16a, 16b) insérées entre ladite cellule de charge et à la fois ladite plaque supérieure et ledit socle, dans lequel
ladite cellule de charge (12) a la forme d'un prisme rectangulaire et dans lequel les bords diagonalement opposés de ladite cellule de charge sont fixés à ladite plaque supérieure et au dit socle (14),
**caractérisée**
en ce que la cellule de charge (12) est disposée avec son grand côté perpendiculaire à l'axe longitudinal du collecteur de pièces.

2. L'appareil de pesage selon la revendication 1, dans lequel ladite machine à sous, machine de jeu ou distributeur automatique est un appareil à sous, de préférence une machine de jeu avec système de gains.

3. L'appareil de pesage selon la revendication 1, qui comprend également un convertisseur analogique-numérique raccordé à ladite jauge de contrainte.

4. Une méthode de détection de vol d'argent dans une machine à sous, un distributeur automatique ou une machine de jeu selon la revendication 1, ladite méthode comprenant les étapes suivantes
une première étape de pesage consistant à peser les pièces dans un collecteur de pièces de ladite machine à sous au moyen d'un appareil de pesage qui est intégré dans ledit collecteur de pièces, mesurant ainsi un premier poids ;
une première étape de calcul destinée à calculer un nombre de pièces dans le collecteur de pièces à partir du premier poids, conduisant à un premier total ;
une autorisation d'accès aux pièces se trouvant dans le collecteur de pièces ;
une seconde étape de pesage consistant à peser les pièces dans un collecteur de pièces de ladite machine à sous au moyen d'un appareil de pesage qui est intégré dans ledit collecteur de pièces, mesurant ainsi un second poids ;
une seconde étape de calcul destinée à calculer un nombre de pièces dans le collecteur de pièces à partir du second poids, conduisant à un second total ; et
le déclenchement d'une alarme si le second total est inférieur au premier total moins un nombre autorisé de pièces enlevées.

5. La méthode selon la revendication 4, dans laquelle les première et seconde étapes de pesage des pièces sont des étapes de pesage de pièces de poids unitaire connu.

6. La méthode selon la revendication 4, dans laquelle les première et seconde étapes de pesage des pièces sont des étapes de pesage de pièces et du collecteur de pièces.

7. La méthode selon la revendication 4, dans laquelle les étapes de pesage de pièces comprennent les sous-étapes suivantes :
mesure d'une accélération du collecteur de pièces en fonction de la machine à sous ; et
mesure de la déformation d'une barre en porte-à-faux qui est déformée par le poids du collecteur de pièces et des pièces se trouvant à l'intérieur lorsque l'accélération du collecteur de pièces en fonction de la machine à sous est essentiellement égale à zéro ou à une accélération connue.

8. La méthode selon la revendication 4, comprenant les étapes suivantes :
détection de l'ouverture d'une porte ;
sensiblement en même temps que l'ouverture de la porte, la mesure, grâce au poids, d'un premier nombre de pièces dans le collecteur de pièces au moyen d'un dispositif de pesage de pièces qui est intégré dans ledit collecteur de pièces ;
détection de la fermeture de la porte ;
mesure, grâce au poids, d'un second nombre de pièces dans le collecteur de pièces, après détection de la fermeture de la porte, au moyen d'un dispositif de pesage de pièces qui est intégré dans ledit collecteur de pièces ; et
détermination d'une différence dans le total des pièces en soustrayant le premier total du second total et en transmettant électroniquement la différence à un système de contrôle du vol.

9. La méthode selon la revendication 8, dans laquelle l'étape de transmission de la différence comprend une étape de déclenchement d'une alarme.

10. La méthode selon la revendication 9, dans laquelle l'étape de déclenchement de l'alarme est une étape consistant à mettre un drapeau dans une zone d'une rangée de table de données associée à la machine à sous dans laquelle la différence est détectée.

11. La méthode selon la revendication 4, comprenant les étapes suivantes :
pesage de pièces dans un collecteur de pièces de ladite machine à sous à l'aide d'un appareil de pesage de pièces qui est intégré dans ledit collecteur de pièces pour déterminer un poids de référence au début de la période de détection;
calcul d'un total de pièces de référence à partir du poids de référence ;
enregistrement d'un nombre de pièces introduites ;
enregistrement d'un total pour chaque retrait de gains autorisé ;
calcul d'un total de pièces prévu en soustrayant le total de chaque retrait ou gain autorisé du total de pièces de référence et en ajoutant le nombre de pièces qui y ont été introduites ;
pesage des pièces dans le collecteur à la fin de la période de détection pour déterminer un poids final du collecteur au moyen d'un appareil de pesage de pièces qui est intégré dans ledit collecteur de pièces ;
calcul d'un total de pièces final à partir du poids final du collecteur ; et
détermination d'une différence de quantité pendant la période de détection en soustrayant le total de pièces final du total de pièces prévu.

12. La méthode selon la revendication 11, comprenant également une étape consistant à signaler que la différence de quantité correspond à une quantité de pièces volées.

13. La méthode selon la revendication 4, pour détecter le vol de pièces à partir d'un sac de remplissage dans la machine à sous, la machine de jeu ou le distributeur automatique, comprenant les étapes suivantes :
une première étape de pesage consistant à peser les pièces dans un sac de remplissage de ladite machine,
une première étape de calcul destinée à calculer un nombre de pièces dans le sac de remplissage à partir du premier poids, conduisant à un premier total ;
une autorisation d'accès aux pièces se trouvant dans le sac de remplissage ;
une seconde étape de pesage consistant à peser les pièces dans ledit sac de remplissage après y avoir autorisé l'accès, mesurant ainsi un second poids ;
une seconde étape de calcul destinée à calculer un nombre de pièces dans ledit sac de remplissage à partir du second poids, conduisant à un second total ; et
le déclenchement d'une alarme si le second total est inférieur au premier total moins un nombre autorisé de pièces enlevées.

14. Une méthode selon la revendication 4 pour détecter l'introduction de fausses pièces dans un collecteur de pièces d'une machine à sous, machine de jeu ou distributeur automatique, comprenant les étapes suivantes :
établissement du poids d'une pièce valide ;
détection du nombre de pièces introduites dans ladite machine ;
pesage du nombre total de pièces accumulées dans ledit collecteur de pièces de ladite machine ;
division du poids des pièces accumulées dans ledit collecteur de pièces par le nombre de pièces détectées pour déterminer le poids moyen des pièces se trouvant dans ledit collecteur de pièces ;
comparaison du poids moyen des pièces se trouvant dans ledit collecteur de pièces par rapport au poids d'une pièce valide pour établir si de fausses pièces ont été introduites dans ledit collecteur de pièces.

15. La méthode de la revendication 14, comprenant également une étape d'ajustement de la différence pour tenir compte des retraits autorisés de pièces.

16. La méthode de la revendication 15, comprenant également une étape de déclenchement d'une alarme lorsque la différence est supérieure à zéro.

17. La méthode de la revendication 16, dans laquelle l'étape de déclenchement de l'alarme est une étape consistant à mettre un drapeau dans une zone d'une rangée de table de données associée à la machine à sous dans laquelle la différence est détectée

18. La méthode de la revendication 17, comprenant l'appareil de pesage de la revendication 1 et comprenant également les étapes suivantes :
pesage de pièces dans un collecteur de pièces de ladite machine à sous à l'aide d'un appareil de pesage de pièces qui est intégré dans ledit collecteur de pièces pour déterminer un poids de référence au début d'une période de détection ;
calcul d'un total de pièces de référence à partir du poids de référence ;
enregistrement d'un nombre de pièces introduites ;
enregistrement d'un total pour chaque retrait de gains autorisé ;
calcul d'un total de pièces prévu en soustrayant le total de chaque retrait ou gain autorisé du total de pièces de référence et en ajoutant le nombre de pièces qui y ont été introduites ;
pesage des pièces dans le collecteur à la fin de la période de détection pour déterminer un poids final du collecteur au moyen d'un appareil de pesage de pièces qui est intégré dans ledit collecteur de pièces ;
calcul d'un total de pièces final à partir du poids final du collecteur ; et
détermination d'une différence de quantité pendant la période de détection en soustrayant le total de pièces final du total de pièces prévu.

19. La méthode selon la revendication 18, comprenant également une étape consistant à signaler que la différence de quantité correspond à une quantité de pièces volées.
